Europäisches Patentamt

European Patent Office

Office européen des brevets

(11) Publication number: **0 026 694**
A1

## (12) EUROPEAN PATENT APPLICATION

(21) Application number: **80401312.6**

(22) Date of filing: **12.09.80**

(51) Int. Cl.³: **B 01 D 53/04**

(30) Priority: **28.09.79 US 79683**

(43) Date of publication of application:
**08.04.81 Bulletin 81/14**

(84) Designated Contracting States:
**DE FR GB**

(71) Applicant: THE BENDIX CORPORATION
Executive Offices Bendix Center
Southfield, Michigan 48037(US)

(72) Inventor: Gardner, Paul J.
2505 East Street
Davenport Iowa 52803(US)

(74) Representative: Huchet, André et al,
Service Brevets Bendix 44, rue François 1er
F-75008 Paris(FR)

(54) Gas separation apparatus.

(57) A gas separation apparatus for the enrichment of a gaseous mixture in one of its components, comprising two parallel columns of adsorbent beds and valving means for alternately flowing said mixture through one of said columns for enrichment through adsorption of the other components while the other column is being regenerated.

According to the invention, each column (10 ; 12) comprises at least two serially connected adsorbent beds (14, 18 ; 22, 26) of decreasing superficial volumes, and may further comprise intermediate storage volumes (16, 20 ; 24, 28) for storing a portion of enriched effluent in view of enhancing subsequent regeneration of the associated adsorbent bed.

For use principally as oxygen separator from atmospheric air.

./...

Fig. 1

## GAS SEPARATION APPARATUS

This invention relates to an apparatus for effecting separation of the components of gaseous mixtures having two or more components using pressure sieving adsorption techniques.  More particularly, the embodiment of the invention here described provides for separation of the gaseous components of air.

It has long been known that the gaseous components of a gaseous mixture selectively adhere to the surface of various materials, the degree and adsorption strength being generally dependent upon the relationship between the size and shape of the gaseous molecules and the pores of the adsorbent.  Commercial use has been made of this principle to provide gases enhanced or enriched in one or more of the constituent members of a feed gas mixture.  Such adsorbents when used in commercial applications have generally been termed molecular sieves.  Molecular sieves of synthetic zeolite adsorbents, for example, have been used for a wide range of gas separation applications including air drying, wherein moisture is removed from an air stream, gas purification and hydrocarbon separation wherein various contaminants are removed from an air stream, and constituent gas enrichment wherein oxygen or nitrogen is selectively removed from an air stream to provide, respectively, a product enriched in nitrogen or oxygen.

Molecular sieves retain adsorbates by strong physical forces rather than by chemisorption.  This means that when an adsorbent is desorbed by subsequent application of heat, reduction of pressure, or by displacement by another type molecule, it leaves the adsorbate in its initial chemico-physical state.  Thus, the adsorption and desorption of molecules are considered completely reversible.

Industrial adsorption processes for the generation of oxygen rich gas from air are based on a pressure swing adsorption principle wherein an oxygen concentrator comprised of a bed of zeolite crystals in granular form is cycled with an air stream passing therethrough between two pressures, $P_1$ and $P_2$, at essentially isothermal conditions.  The adsorption pressure, $P_2$, is always higher than the desorption pressure, $P_1$, which is generally ambient pressure but which in some applications has been below ambient pressure. In the typical oxygen concentration system, multiple parallel concentrator beds, usually two, are used. The first bed is pressurized with compressed air initiating adsorption of nitrogen therein. After pressurization, the first bed is de-pressurized and the desorbed gas is vented. At the same time the compressed air is switched to pressurize the second bed and start its adsorption step. During or immediately after depressurization of the first bed, a portion of the product gas from the second bed, which is, of course, oxygen enriched, is passed through the first bed to purge that bed, that is, to displace the adsorbed nitrogen molecules from the adsorbent. Subsequently, the compressed air feed gas is switched back to the first bed while the second bed is depressurized and purged with a portion of the product gas then issuing from the first bed.

The important feature of the gas enrichment process is the use of a portion of the product gas to purge the parallel bed during desorption to maintain the bed well regenerated and to ensure a subsequent high degree of adsorbate retention during the enrichment phase of the cycle. However, of course, purging an adsorbent bed with a portion of the product gas reduces the amount of product gas which can be recovered for other uses. The amount of purge gas used for bed regeneration is usually controlled by an orifice or pressure control valve and other check and control valving.

If only the undesired components were adsorbed on the adsorbent and the desired components passed through, the pressure swing adsorption principle would be straight forward, relatively simple to implement and inexpensive to operate. The actual fact is, however, that, generally, both some of the undesired and desired components are adsorbed so that the process must incorporate some means of increasing the net effective adsorption ratio between the various components. In the case of air as the feed mixture, air is 4/5 nitrogen. Thus, for oxygen enrichment, the net effective adsorption ratio of nitrogen to oxygen must exceed 4/1. Generally, adsorbents do not exhibit such high net effective nitrogen to oxygen adsorption ratios when used on a single pass-through basis. The use of the above mentioned counterflow purge with an enriched product gas greatly improves the extent of enrichment available for a given bed size and permits high order gas concentrations. In a typical enrichment system, then, with some counterflow purge on each half-cycle, the system bootstraps up to the maximum enrichment attainable under the conditions prevailing. However, as previously explained, the use of counterflow purge exhausts some of the desired enriched gas product thus contributing to system inefficiency.

It is, therefore, an essential object of the present invention to improve efficiency of gas separation systems of the kind referred to above, while avoiding the drawbacks met before.

This object is achieved, in accordance with the teaching of this invention, and in an apparatus of the kind comprising at least two parallel arranged columns of beds of selective gas adsorbent material, and valving means for alternately flowing said gaseous mixture through at least one of said columns wherein it gets enriched in said one gaseous component through adsorption of its other components, while the other of said columns is being regenerated, thanks to the fact that each of said columns comprises at least two serially connected adsorbent beds, namely an upstream bed alternately connectable to a source of gaseous mixture at a relatively high pressure and to a relatively low pressure gas sink, and a downstream bed connected to said first bed for receiving the effluent therefrom and to an output for enriched gaseous product through a pressure regulator which maintains the pressure in said one column at a first intermediate value during an adsorption step. The apparatus preferably further comprises valve means for communicating both columns after completion of an adsorption step to equalize the pressure therein at a second intermediate value, and more specifically, a valve member for communicating both columns at locations intermediate their respective upstream and downstream adsorbent beds. In a preferred embodiment, the ratio of the superficial volumes of said upstream and downstream adsorbent beds is higher than 1:1, preferably about 3:1. The apparatus may further comprise a storage volume connected to the output of each adsorbent bed for receiving and storing a portion of the enriched gaseous mixture effluent therefrom, and a valve member controlling the communication between each said storage volume and its associated adsorbent bed.

The invention set forth above derives from the following considerations :

Whereas it was previously believed that the extent of nitrogen adsorption and desorption were the key factors to a high net effective adsorption ratio between nitrogen or oxygen, it now seems that this is not the major, critical consideration in the process of obtaining an oxygen enriched product. Rather, it appears that maintaining a high level of oxygen saturation by cross flow or counterflow is a key factor in minimizing oxygen adsorption during the feed air pressurization and feed through portion of the system cycle. More particularly, if the enriched product gas comprising the purge gas is supplied by cross flow or counterflow to the exhausted

4

0026694

bed but not discharged therefrom, the enriched purge gas serves as a non-consumed ballast which is recovered during the pressurization and feed-through portion of the system cycle for that bed. Specifically, the oxygen enriched purge gas, as it flows into the exhausted bed, causes partial pressure striping of some residual nitrogen which moves to a frontal region. Some of the purge gas oxygen molecules occupy oxygen positions and interstitial space on the adsorbent. On ensuing pressurization and flow-through on that bed, the in-place oxygen front minimizes new oxygen adsorption and with increased pressure in the bed some nitrogen partial pressure striping of oxygen occurs and the oxygen ballast moves forward in the system.

In the present invention a storage volume is provided to collect a portion of the effluent product gas from the adsorbent bed. During regeneration the storage volume is isolated from the adsorbent bed which is then vented to atmosphere. Subsequently the bed is repressurized by reestablishing communication with the storage volume before feed gas is again introduced into the bed.

It has been found that molecular sieves such as zeolites exhibit a rapidly diminishing nitrogen adsorption from air efficiency vs. the length of the adsorbent bed. Specificially, in single pass type adsorption tests performed on adsorbent beds of various lengths it is noted that the ratio of nitrogen to oxygen adsorption decreases with increasing bed length. This is due to the changing adsorption ratio between nitrogen and oxygen as the interstitial gas composition (partial pressure vs. total pressure) varies along the adsorbent bed path length. Thus, for higher levels of oxygen enrichment it has been found that a series/parallel stage arrangement of adsorbent beds is most efficient. In this type of arrangement, each parallel system column is comprised of a series of separate adsorbent beds. In the embodiment to be shown below wherein two serially connected beds are connected together to comprise each system column, a larger capacity upstream adsorbent bed is connected to a smaller capacity downstream adsorbent bed. Cross flow connections between columns to effect purge and thus regeneration of exhausted adsorbent beds are provided between the output of each adsorbent bed and the output of its corresponding adsorbent bed in a parallel column. By this means, enriched purge gas is injected not only into the downstream output of a column but also, in effect, intermediate into the column.

It has also been discovered that efficiency of operation of the system described herein can be improved by rapidly cycling the system.

These and other advantageous features of the invention will become readily apparent from the following description of some preferred embodiments, given by way of example only, and with reference to the accompanying drawings, in which :

- Figure 1 is a diagrammatic representation of one form of a gas separation system made according to the invention ;

- Figure 2 is a diagrammatic representation of a single adsorbent stage and is useful in explaining the adsorption principle on which the invention rests ;

- Figure 3 is a diagrammatic representation of a single adsorbent stage with a vessel for storing a portion of the enriched gaseous product and is useful in explaining the theory of the invention ;

- Figure 4 shows a modification of the arrangement of Figure 3 ;

- Figure 5 is a diagrammatic representation of a gas enrichment system having parallel adsorbent columns. ;

- Figure 6 illustrates the preferred embodiment of the invention ; and

- Figure 7 illustrates the timed cycle of the system of Figure 6.

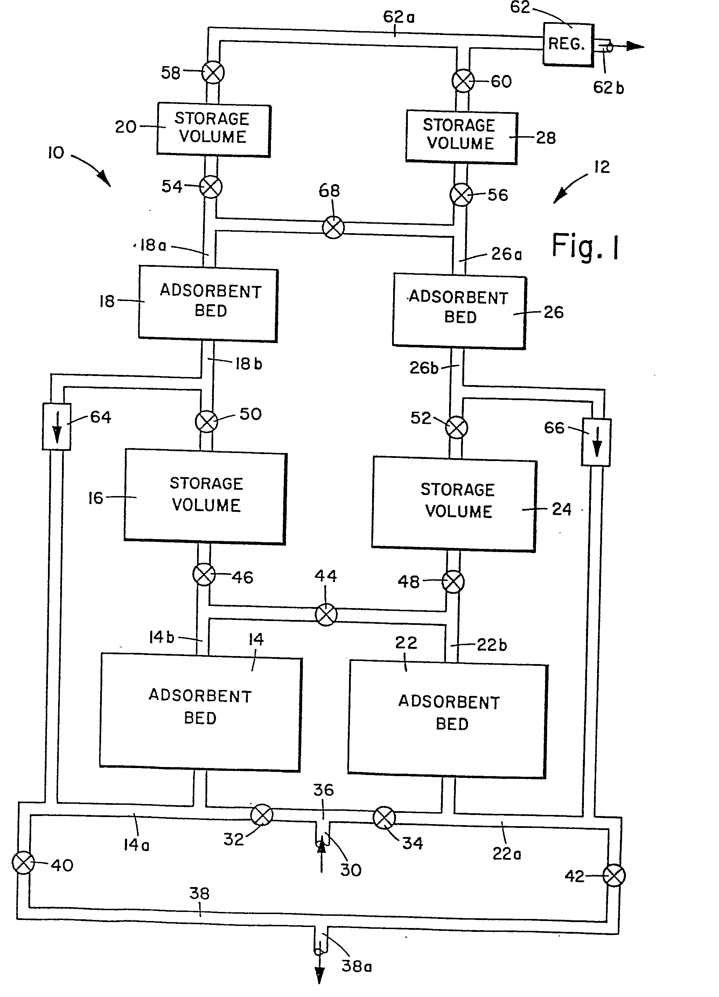

Referring first to Fig. 1, this latter shows one form of a series/parallel adsorbent bed arrangement according to the present invention having the parallel columns 10 and 12. The columns are similar, typical column 10 being comprised of a first stage adsorbent bed 14 and an associated in-line gas storage container 16 and a serially arranged second stage adsorbent bed 18 and its associated in-line gas storage container 20. Column 12 includes similar adsorbent beds 22, 26 and in-line gas storage containers 24, 28. The piping and valving connecting the various system elements is comprised of a feed gas inlet 30 and inlet valves 32 and 34 in feed gas manifold 36. Valves 32 and 34 are activated to alternately supply the feed gas from manifold 36 to manifolds 14a and 22a.

A purge gas exhaust manifold 38 having a port 38a which exhausts to a gas sink such as a vacuum pump (not shown) or the atmosphere is connected alternately through valves 40 and 42 to manifolds 14a and 22a.

The outlet ports 14b and 22b, respectively, of beds 14 and 22 communicate through valve 44. In addition, outlet ports 14b and 22b communicate respectively with storage containers 16 and 24 through valves 46 and 48. Storage containers 16 and 24 communicate with adsorbent beds 18 and 26, respectively, through valves 50 and 52, while beds 18 and 26 respectively communicate through valves 54 and 56 with storage volumes 20 and 28, the latter storage volumes being connected through valves 58 and 60, respectively, to product manifold 62a. The pressure in manifold 62a is set by gas pressure regulator 62 with the useable effluent being available at port 62b. Ports 18a and 26a communicate through cross flow valve 68. Ports 18b and 26b communicate respectively through check valves 64, 66 and valves 40, 42 to exhaust manifold 38.

In the operation of the arrangement of Figure 1, air, pressurized, cleaned and dehumidified by means which are not shown but which will be obvious to one skilled in the art, is applied to manifold 36 through port 30. Valves 32, 46 and 42 are opened, with the other valves being closed, to pressurize adsorbent bed 14 wherein the air is oxygen enriched, which enriched air flows into and pressurizes storage volume 16. At the same time adsorbent beds 22 and 26 are vented through port 38a. As the pressure in storage volume 16 increases valves 50, 54 and 58 open to pass oxygen enriched air from volume 16 through adsorbent bed 18 to additionally pressurize that bed and storage volume 20 with air which is even more highly oxygen enriched and to permit some oxygen enriched gas product to be delivered through pressure regulator 62 to port 62b. The effect of the pressure regulator 62 is, of course, to cause the gas pressure within column 10 to be intermediate the source and sink pressures.

At the completion of the system half-cycle, wherein column 10 is pressurized, all valves are closed except cross flow valves 44 and 68, which are opened so that adsorbent bed 14 depressurizes into adsorbent bed 22 through valve 44 and adsorbent bed 18 depressurizes into adsorbent bed 26 through valve 68. This causes oxygen enriched air stored in beds 14 and 18 to flow into, respectively, beds 22 and 26 until the gas in columns 10 and 12 attains a pressure about midway between the sink pressure and the pressure set by regulator 62, and to displace some of the remaining adsorbed nitrogen in beds 22 and 26 with oxygen molecules, providing ballast storage for the oxygen molecules. Then all valves close except valves 48 and 56 to thereby cause the oxygen enriched air previously stored in storage volumes 24 and 28 during the prior system half-cycle to backflow into beds 22 and 26 respectively to complete regeneration of those beds.

Subsequently, all valves close except valves 34, 48 and 40. This begins the second half of the system cycle where bed 22 is pressurized from manifold 36. Of course, subsequently valves 52, 56 and 60 open to fully pressurize column 12, in like manner as was column 10 during the system first half cycle, to provide additional oxygen enriched product gas at port 62b. Of course, with valve 40 open during the second half cycle, beds 14 and 18 are vented through exhaust port 38a to the gas sink to begin regeneration of those beds by low pressure desorption of the adsorbent beds.

0026694

7

The above process repeats through 10 to 15 cycles during which the oxygen concentration of the product gas at port 62b bootstraps up to design specifications and remains constant thereafter. The cycle time is quite low, in the order of 3 seconds for a half cycle or 6 seconds for a full cycle. By this means the adsorbent beds may be kept small and frequently and easily regenerated so that loss of the desirable components, in this case oxygen, from the system can be kept low.

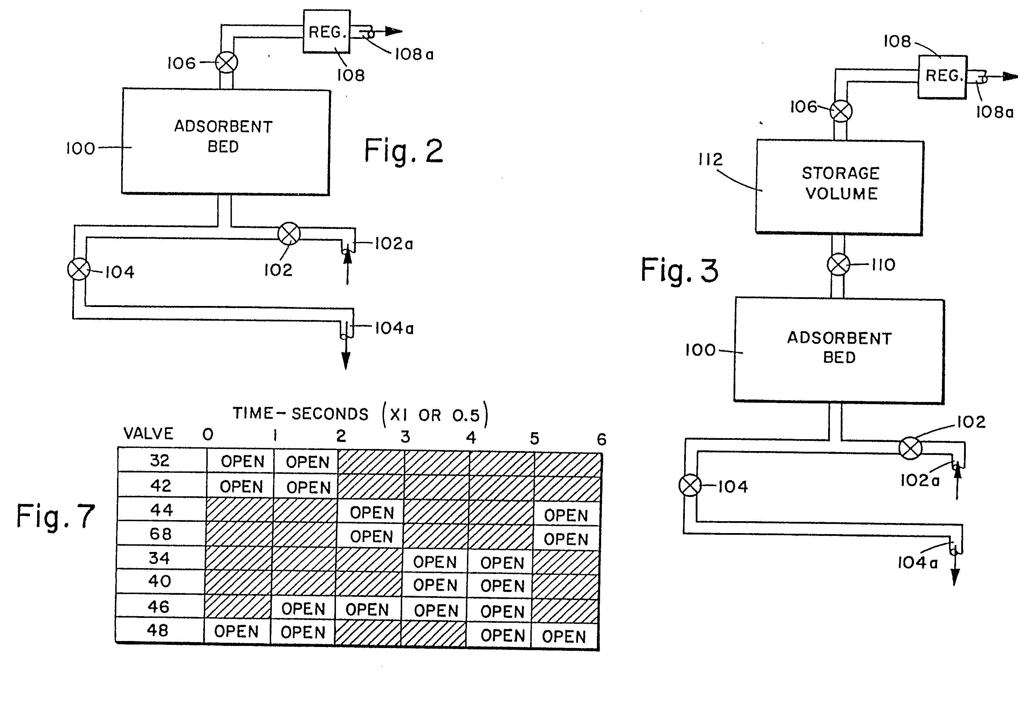

A single stage adsorbent bed is shown at Figure 2 to help in explaining the principles of this invention. Referring to Figure 2, an adsorbent bed 100 receives clean, dry pressurized air from port 102a through valve 102 and exhausts into a gas sink via port 104a through valve 104. The oxygen enriched product is supplied through valve 106 and pressure regulator 108 to port 108a. A bed such as bed 100, incorporated into an embodiment of the invention, used a molecular sieve 5A-40 having a diameter of 11,3 cm, a length of 9,2 cm and a molecular sieve weight of 562 g. When the bed was cycled between adsorption at 385 kPa and desorption at 105 kPa, in a manner which should be obvious to one skilled in the art, the product gas was enriched to approximately 30% oxygen by volume. When the adsorption/desorption pressure swing was increased to 385 kPa/3,5 kPa, the product gas was enriched to about 55% oxygen. Reducing the bed length for a given pressure swing reduced the oxygen enrichment somewhat while increasing the bed length improved oxygen enrichment only slightly. For example, for a pressure swing of 385 kPa/105 kPa, reducing the bed length to 5,1 cm and 2,55 cm, respectively, reduced oxygen concentrations to 28% and 26%. For a 30,5 cm bed length oxygen concentration increased to only 35%. Of course, with the arrangement of Figure 2, most of the interstitial and adsorbate gases are lost during bed regeneration.

Refer now to Figure 3 which shows the same single bed of Figure 2 with a storage volume 112 and valve 110 inserted between adsorbent bed 100 and valve 106. During the pressurization/adsorption half-cycle during which pressurized air is supplied through valve 102 and the resulting oxygen enriched product is taken from port 108a, a certain volume of enriched gas is retained in storage volume 112. During regeneration, all valves except valve 104 are closed to vent and thus desorp bed 100 in the same manner as the bed was desorped when used in the system of Figure 2. However, just prior to repressurization, valve 104 is closed and valve 110 is opened to permit the oxygen enriched gas in storage volume 112 to backflow into bed 100. This builds the bed pressure with an oxygen enriched gas in preparation for repressurization. Using the arrangement of Figure 3 with a 385 kPa/105 kPa pressure swing, the oxygen concentration of the product gas will bootstrap to about 50%. This compares with a 30% oxygen content without the backflow storage volume. For a 385 kPa/3,5 kPa pressure swing oxygen content becomes about 75% (compared to 55% without a backflow volume). Some slight enrichment improvement can be attained with the device of Fig. 3 by initiating backflow just prior to the closing of valve 104 so that there is a small overlap in the venting and backflow process steps.

Any size backflow storage volume, within reasonable limits, appears to provide some improvement in system operation. Specifically, back flow storage volumes of about 0,5 to 10 times the superficial volume of the absorbent bed container were tested and found to be of some use. The most effective size of backflow storage volume, however, is in the range of about 3 to 5 times the bed superficial volume.

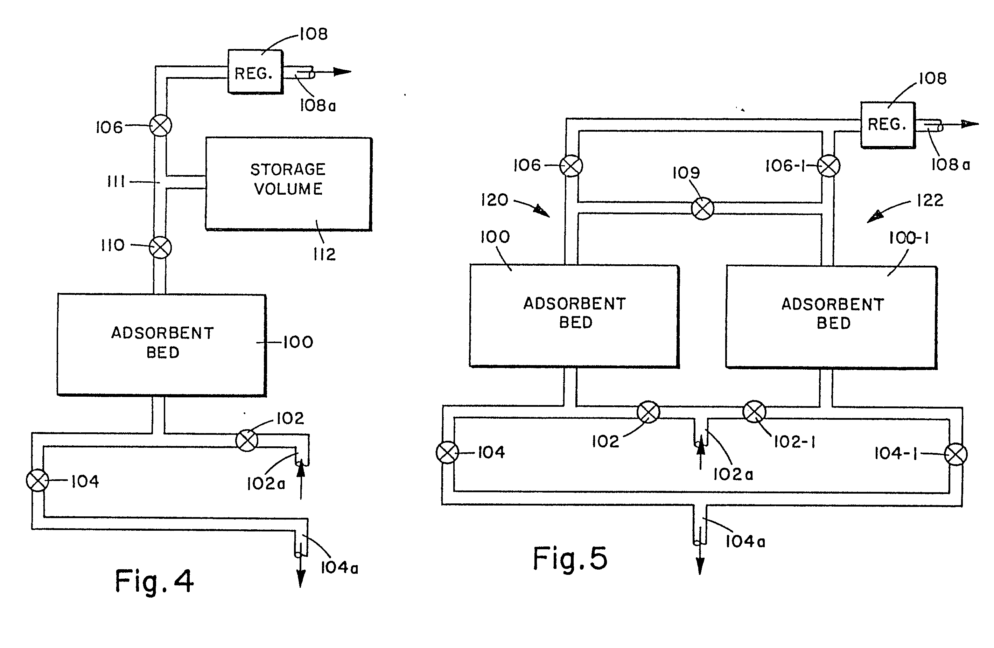

Figure 4, reference to which should now be made, includes the same elements as the device of Figure 3 and is arranged the same way except that backflow storage volume 112 is connected on a Tee coupling 111 off the main gas conduit. This arrangement worked quite as well as the arrangement of Figure 3 except, as might be expected, pressure equalization between volume 112 and bed 100 was somewhat longer due to the Tee coupling than when volume 112 is directly in the gas conduit line as in Figure 3.

Figure 5, reference to which should now be made, shows the identical arrangement of Figure 2 except duplicated in parallel columns. In particular, columns 120 and 122 each are identical to the arrangement of Figure 2 wherein the elements of column 122 are provided with a -1 suffix. In addition, cross flow between the columns is provided by cross flow valve 109 and appropriate conduit. The operation of columns 120 and 122 is generally identical to the operation of the arrangement of Figure 2 except, of course, columns 120 and 122 operate 180° out of phase with one another so that while one column is being pressurized the other column is being vented. In essence, one adsorbent storage bed acts as a backflow storage volume for the other. More particularly, the arrangement of Fig. 5 begins operation with valves 102 and 106 open to permit adsorbent bed 100 to be pressurized from port 102a. At the same time valve 104-1 is open to vent adsorbent bed 100-1 through port 104a. The other valves are closed. Oxygen enriched product gas is available from bed 100 through valve 106, pressure regulator 108 and port 108a. At the completion of the first half cycle wherein column 120 is pressurized, all valves are closed except for cross flow valve 109 which is opened allowing the pressures in beds 100 and 100-1 to equalize by a flow of oxygen enriched product from bed 100 to bed 100-1. This completes the regeneration of bed 100-1. Subsequently, valve 109 closes and valves 102-1, 106-1 and 104 open to pressurize column 122 and simultaneously to vent adsorbent bed 100. This comprises the second half of the system cycle, at the termination of which all valves close except for valve 109 to provide cross flow therethrough from bed 100-1 to bed 100 thereby completing the regeneration of the latter bed. Continued cyclic operation of the system with a pressure swing of 385 kPa/105 kPa and the same beds as the bed used in the arrangement of Fig. 3 produces an oxygen enriched product of about 60% oxygen. Note that the amount of oxygen lost by the venting step in the operation of arrangement of Fig. 5 is about one-half the amount lost in the operation of the arrangement of Fig. 2, assuming identical adsorbent beds.

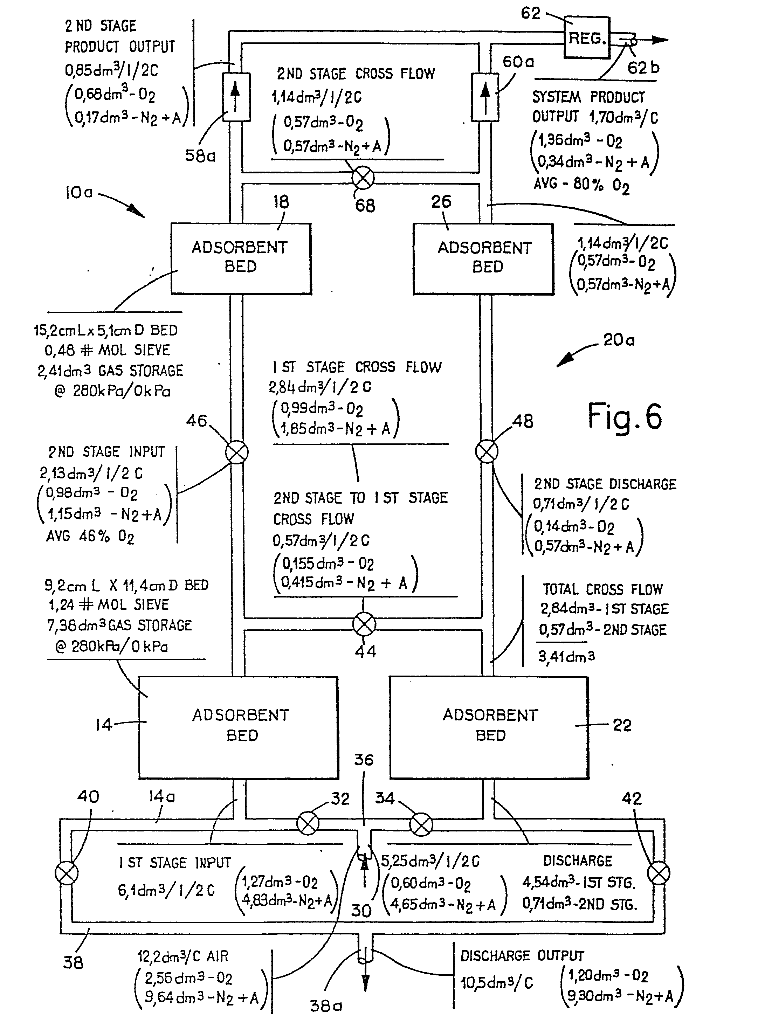

Figure 6 is the preferred embodiment of the invention and reference to that figure should now be made. Note that the arrangement of Fig. 6 is very similar to the arrangement of Fig. 1 except that the storage volumes 16, 20, 24, 28 and their associated valves 50, 52, 54, 56, 58, 60 of Fig. 1 are not used in the arrangement of Fig. 6. In addition, in Fig. 6 the downstream adsorbent beds are not vented directly to the vent manifold as in Fig. 1 but rather each is vented through its associated upstream bed as will be more fully explained. For this reason check valves 64 and 66 of Figure 1 are not needed here. It should be obvious to one skilled in the art that the downstream beds could be vented as in Fig. 1. However, it has been found that the venting as shown in Fig. 6 provides somewhat improved efficiency for the embodiment illustrated. The elements of Fig. 6 are numbered identically to the elements of Fig. 1 indicating that the elements, in fact, can be identical except for check valves 58a, 60a, which are new.

For clarity, the parameters of the preferred system are marked on Fig. 6. Beds 14 and 22 and beds 18 and 26 are respectively identical. The superficial volume of an upstream bed, for example bed 14, is about 3 times the superficial volume of the downstream bed, for example bed 18. By superficial volume of a bed is meant the gas storage capacity of a bed and its container and includes any adsorbed gas and interstitial gas in addition to the gas contained in the container free space. This provided excellent results for high percentage oxygen enrichment as did a volume ratio range of about 2/1 to 4/1. As can be seen, this system provided a steady state final product which is 80% oxygen by volume from standard clean dry air.

The system of Fig. 6 operated on the timed schedule shown in Fig. 7 where a full cycle of about 3 to 6 seconds provided excellent results.

For convenience, the schedule of Fig. 7 shows a 6 second cycle.

The process performed by the arrangement of Fig. 6 is as follows. Clean, dry ambient air is supplied to inlet manifold 36 through port 30 at the rate of 12,2 dm$^3$ per system cycle. This, of course, means that 6,1 dm$^3$ of input air is supplied to each of the system columns 10a, 20a, for each system half cycle. Referring now also to Fig. 7, it can be seen that during the first second of the system cycle valves 42 and 48 are open permitting beds 22 and 26 to vent to the gas sink, preferably the atmosphere. In addition, valve 32 is open allowing bed 14 to be pressurized. During the next second of the system cycle valve 46 also is open permitting bed 18 to be pressurized and the oxygen enriched product to flow through check valve 58a and pressure regulator 62 to port 62b. During the third second of the system cycle valves 44, 46 and 68 are open and the other valves are closed. This permits cross flow between the pressurized column and the vented column, specifically, from column 10a to column 20a, at this time, whereby the pressures in the various adsorbent beds are equalized. During the fourth second of the system cycle valves 34, 40 and 46 are open and the other valves closed. It can be seen that this is the beginning of the second half of the system cycle wherein the parallel column, column 20a, is pressurized and the other column, column 10a, is vented. Specifically, adsorbent bed 22 is pressurized at this time. Subsequently, during the next second, valve 48 is open to pressurize adsorbent bed 26 so that the oxygen enriched product is again available at port 62b. During the last second of the system cycle valves 44, 48 and 68 are open to permit cross flow from column 20a to column 10a whereby the adsorbent beds are pressure equalized. The system continues to cycle in this manner through 10 to 15 cycles to bootstrap the product gas to the system design enrichment after which continued system cycling continues to produce the desired oxygen enriched product

In the preferred embodiment according to Figure 6 the various valves 32, 34, 40, 42, 44, 46, 48 and 68 are full flow solenoid controlled. That is, the valves are either fully open or fully closed depending on an electrical control signal thereto. The electrical control signals are provided by a simple timing mechanism of the type which should be obvious to one skilled in the art. In the prior art gas enrichment system cycles have been controlled on a time basis, as preferred here, or by sensing the enrichment of the resulting gases at various points in the system. Although actual sensing of the gas components to control system operation might appea to provide optimized system operations and thus might be expected to be preferred, in fact, a satisfactory time cycle can be discovered empirically and then used to set the system cycle to within a very close degree of what might be obtained from the more complex and expensive sensing controller. Thus, taking all factors into consideration, the timed controller is preferred at the present time.

Generally a gas enrichment system having parallel, alternately pressurized, columns is preferred. Such systems are shown in Figs. 1, 5 and 6. In certain applications, however, the single column arrangement, such as, for example, shown in Figs. 3 and 4, might be preferred. In other applications three or more parallel columns might be used. Whereas two parallel columns are preferably operated on a 50/50 cycle, three parallel columns are preferably operated on a 33/33/33 cycle and four parallel columns are operated in pairs on a 50/50 cycle but time offset by 25% of a total cycle. Many other arrangements, of course, could be used without departing from the scope of the present invention.

CLAIMS

1. A gas separation apparatus for the enrichment of a gaseous mixture in one of its gaseous components, comprising at least two parallel arranged columns of beds of selective gas adsorbent material, and valving means for alternately flowing said gaseous mixture through at least one of said columns wherein it gets enriched in said one gaseous component through adsorption of its other components, while the other of said columns is being regenerated, characterized in that each of said columns (10, 10a ; 12, 20a) comprises at least two serially connected adsorbent beds (14, 18 ; 22, 26), namely an upstream bed alternately connectable to a source (36) of gaseous mixture at a relatively high pressure and to a relatively low pressure gas sink (38), and a downstream bed connected to said first bed for receiving the effluent therefrom and to an output for enriched gaseous product through a pressure regulator (62) which maintains the pressure in said one column at a first intermediate value during an adsorption step.

2. A gas separation apparatus according to claim 1, characterized in that it further comprises valve means (44, 46, 48, 68) for communicating both columns after completion of an adsorption step to equalize the pressure therein at a second intermediate value.

3. A gas separation apparatus according to claim 2, characterized in that said valve means include a valve member (44) for communicating both columns at locations intermediate their respective upstream (14 ; 22) and downstream (18 ; 26) adsorbent beds.

4. A gas separation apparatus according to any of claims 1 to 3, characterized in that the ratio of the superficial volumes of said upstream (14 ; 22) and downstream (18 ; 26) adsorbent beds is higher than 1:1, preferably about 3:1.

5. A gas separation apparatus according to any of claims 1 to 4, characterized in that it further comprises a storage volume (16, 20 ; 24, 28) connected to the output of each adsorbent bed (14, 18 ; 22, 26) for receiving and storing a portion of the enriched gaseous mixture effluent therefrom, and a valve member (46, 48, 54, 56) controlling the communication between each said storage volume and its associated adsorbent bed.

6. A gas separation apparatus according to claim 5, characterized in that the capacity of said storage volume is comprised between 0,5 and 10 times, preferably about 3 to 5 times, the superficial volume of the associated adsorbent bed.

Fig. 1

## Fig. 3

REG. —108a

108

106

STORAGE VOLUME —112

110

ADSORBENT BED —100

102 —102a

104a

104

## Fig. 2

108a

108

REG.

106

ADSORBENT BED —100

102 —102a

104a

104

## Fig. 7

TIME—SECONDS (X1 OR 0.5)

| VALVE | 0 | 1 | 2 | 3 | 4 | 5 | 6 |
|---|---|---|---|---|---|---|---|
| 32 | OPEN | | OPEN | | | | |
| 42 | OPEN | | OPEN | | | | |
| 44 | | | | OPEN | | | OPEN |
| 68 | | | | OPEN | | | OPEN |
| 34 | | | | | OPEN | OPEN | |
| 40 | | | | | OPEN | OPEN | |
| 46 | | | | | OPEN | OPEN | |
| 48 | | OPEN | | | | | OPEN |

Fig.5

Fig.4

0026694

4 / 4

**Fig. 6**

2ND STAGE PRODUCT OUTPUT 0,85 dm³/1/2C (0,68 dm³ - O₂ / 0,17 dm³ - N₂ + A)

2ND STAGE CROSS FLOW 1,14 dm³/1/2C (0,57 dm³ - O₂ / 0,57 dm³ - N₂ + A)

REG. 62 / 60a / 62 b

SYSTEM PRODUCT OUTPUT 1,70 dm³/C (1,36 dm³ - O₂ / 0,34 dm³ - N₂ + A) AVG - 80 % O₂

58a

10a

ADSORBENT BED 18

ADSORBENT BED 26

1,14 dm³/1/2C (0,57 dm³ - O₂ / 0,57 dm³ - N₂ + A)

15,2 cm L x 5,1 cm D BED 0,48 # MOL SIEVE 2,41 dm³ GAS STORAGE @ 280 kPa / 0 kPa

1ST STAGE CROSS FLOW 2,84 dm³/1/2C (0,99 dm³ - O₂ / 1,85 dm³ - N₂ + A)

20a

46

2ND STAGE INPUT 2,13 dm³/1/2C (0,98 dm³ - O₂ / 1,15 dm³ - N₂ + A) AVG 46 % O₂

2ND STAGE TO 1ST STAGE CROSS FLOW 0,57 dm³/1/2C (0,155 dm³ - O₂ / 0,415 dm³ - N₂ + A)

48

2ND STAGE DISCHARGE 0,71 dm³/1/2C (0,14 dm³ - O₂ / 0,57 dm³ - N₂ + A)

9,2 cm L X 11,4 cm D BED 1,24 # MOL SIEVE 7,38 dm³ GAS STORAGE @ 280 kPa / 0 kPa

TOTAL CROSS FLOW 2,84 dm³ - 1ST STAGE 0,57 dm³ - 2ND STAGE 3,41 dm³

44

14

ADSORBENT BED

36

ADSORBENT BED 22

40 / 14a

32 / 34

42

1ST STAGE INPUT 6,1 dm³/1/2C (1,27 dm³ - O₂ / 4,83 dm³ - N₂ + A)

5,25 dm³/1/2C (0,60 dm³ - O₂ / 4,65 dm³ - N₂ + A)

30

DISCHARGE 4,54 dm³ - 1ST STG. 0,71 dm³ - 2ND STG.

38

12,2 dm³/C AIR (2,56 dm³ - O₂ / 9,64 dm³ - N₂ + A)

38a

DISCHARGE OUTPUT 10,5 dm³/C (1,20 dm³ - O₂ / 9,30 dm³ - N₂ + A)

| | European Patent Office | EUROPEAN SEARCH REPORT | Application number |
|---|---|---|---|
| | | | EP 80 40 1312 |

## DOCUMENTS CONSIDERED TO BE RELEVANT

| Category | Citation of document with indication, where appropriate, of relevant passages | Relevant to claim |
|---|---|---|
| | <u>US - A - 3 102 013</u> (CH.W. SKAR-STROM) <br><br> * Column 1, line 50 - column 3, line 49; figure * <br><br> -- <br><br> <u>US - A - 3 252 268</u> (TH.M. STARK) <br> * Figure 1; column 4, line 26 - column 8, line 41 * <br><br> ---- | 1 <br><br><br><br><br><br> 1 |

**CLASSIFICATION OF THE APPLICATION (Int. Cl.³)**

B 01 D 53/04

**TECHNICAL FIELDS SEARCHED (Int. Cl.³)**

B 01 D 53/00

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| The Hague | 18-11-1980 | BOGAERTS |

EPO Form 1503.1 06.78